# EUROPÄISCHE PATENTSCHRIFT

(11) **EP 1 145 654 B1**
(45) Veröffentlichungstag und Bekanntmachung des Hinweises auf die Patenterteilung: **14.11.2007**
(21) Anmeldenummer: 01108959.6
(22) Anmeldetag: 10.04.2001
(51) Int. Cl.: A23N 7/00

(54) **Schälvorrichtung**
Peeling device
Eplucheuse

(30) Priorität: 12.04.2000 DE 10018145; 10.06.2000 DE 20010454 U
(43) Veröffentlichungstag der Anmeldung: 17.10.2001
(73) Patentinhaber: Friess, Matthias, 97215 Uffenheim (DE)
(72) Erfinder: Friess, Matthias, 97215 Uffenheim (DE)
(74) Vertreter: Bickel, Michael

(56) Entgegenhaltungen:
- EP-A- 0 451 487
- EP-A- 0 799 580
- WO-A-95/07030
- DE-A- 1 757 433
- DE-A- 2 235 104
- DE-A- 2 256 899
- DE-A- 2 425 932

## Beschreibung

Die vorliegende Erfindung betrifft eine Schälvorrichtung, insbesondere für Obst und Gemüse, wie Spargel, Karotten, Gurken und andere längliche Gemüsesorten. Die Erfindung ist je nach ihrer Dimensionierung auch für beliebige andere langgestreckte Schälgüter, wie zum Beispiel Holz, geeignet.

Gebräuchlich zum Schälen von Obst und Gemüse sind handbetätigte Obst- und Gemüseschäler, die einen Griff zum Halten und ein an dem Griff angeordnetes Schälmesser aufweisen. Das Schälmesser weist üblicherweise ein flaches, meist aus Metall bestehendes, Messerstück mit einer geschärften Schälkante auf. Wird das Schälmesser an einem zu schälendem Obst oder Gemüse zur Anlage gebracht und das Schälmesser, sei es durch Bewegen des Messers oder durch Bewegen des Obst- oder Gemüsestücks, in einer Schälrichtung relativ zu dem Obst- oder Gemüsestück bewegt, so dringt die Schälkante des Messerstücks ein Stück weit in das Obst- oder Gemüsestück ein und schält einen Teil der Haut oder Schale des Obst- oder Gemüsestücks ab. Die Schälrichtung, in der der Gemüseschäler dabei relativ zu dem Gemüsestück bewegt wird, verläuft üblicherweise senkrecht zu der Schälkante des Schälmessers, wobei der Gemüseschäler auch funktioniert, wenn die Schälkante mit der Schälrichtung einen Winkel zwischen 90° und etwas mehr als 0° einschließt. Eine Vorrichtung zur Begrenzung der Eindringtiefe an dem Schälmesser verhindert dabei, dass das Messerstück beim Schälen zu tief in das Obst- oder Gemüsestück eindringt. Die Vorrichtung zur Begrenzung der Eindringtiefe ist dabei üblicherweise ebenfalls ein flaches, meist aus Metall bestehendes, Element, das im Wesentlichen parallel und in Schälrichtung versetzt zu dem Messerstück angeordnet ist, wobei der Abstand zwischen dem Messerstück und dem Begrenzungsstück in einer Richtung senkrecht zu dem Schälgut die maximale Eindringtiefe des Messerstücks festlegt.

Derartige handbetätigte Obst- und Gemüseschäler gestalten das Schälen von Obst und Gemüse, insbesondere von Spargel, sehr mühsam, da der Schäler für jedes Gemüsestück mehrmals, bei Spargel zwischen 6 und 8 mal, über die ganze Länge des Gemüsestücks geführt werden muss, bis die gesamte Oberfläche abgeschält ist.

Zur Verbesserung der Effizienz beim Spargelschälen ist ein handbetätigter Spargelschäler mit zwei gelenkig miteinander verbundenen Schenkeln bekannt, wobei am Ende jedes Schenkels ein Schälmesser angeordnet ist. Durch Zusammendrücken der beiden Schenkel können die Schälmesser an gegenüberliegenden Seiten eines Spargelstücks zur Anlage gebracht werden, wobei bei jedem Schälvorgang, bei dem die Schälvorrichtung entlang des Spargels bewegt wird, zwei Streifen der Schale des Spargels abgelöst werden. Die Anzahl der Schälvorgänge kann bei dieser Schälvorrichtung gegenüber den zuvor genannten Obst- und Gemüseschälern halbiert werden.

Zur weiteren Reduzierung der Anzahl der erforderlichen Schälschritte wurde bereits vorgeschlagen, zwei der zuvor beschriebenen "Spargelschälzangen" zu verbinden und gemeinsam zu betätigen, um in einem Schälvorgang vier Streifen der Spargelschale abzuschälen. Die Schälzangen sind dabei in Längsrichtung des Spargels beabstandet angeordnet, wobei die Schälmesser der einen Schälzange gegenüber den Schälmessern der anderen Schälzange in radialer Richtung des Spargel um 90° versetzt sind. Da ein Naturprodukt, wie Spargel, niemals eine ganz ebene Oberfläche aufweist und auch nicht immer ganz gerade ist kann es bei der beschriebenen Vorrichtung, bei der die Schälzange in Längsrichtung des Spargels beabstandet an dem Spargel angreift, dazu kommen, dass sich der Spargel zwischen den beiden Schälzangen verklemmt, dass er beschädigt wird oder dass die Schälmesser "verstopfen".

Die DE 22 56 899 beschreibt eine Spargelschälvorrichtung mit einer kegelstumpfförmigen Schale, an der mehrere Schälmesser befestigt sind. Die Schälmesser weisen jeweils bogenförmige Schneiden auf, die um eine Öffnung zur Durchführung eines Spargels angeordnet sind, wobei die Messer beispielsweise mittels einer Feder in Richtung der Öffnung bewegbar sind.

Ziel der vorliegenden Erfindung ist es daher, eine Schälvorrichtung für Obst und Gemüse zur Verfügung zu stellen, bei der die Anzahl der erforderlichen Schälvorgänge gegenüber einem einzelnen Schälmesser oder einer Schälzange reduziert werden kann und bei der die oben genannten Probleme nicht auftreten.

Diese Aufgabe wird durch eine Schälvorrichtung für Obst und Gemüse gemäß den Merkmalen des Patentanspruchs 1 gelöst. Danach weist die Schälvorrichtung eine Aufnahme zum Halten des Schälguts und wenigstens drei Schäleinheiten mit jeweils einem Schälmesser auf, wobei die einzelnen Schälmesser dazu ausgebildet sind, die Haut oder die Schale eines Schälgutes abzuschälen, wenn das Schälmesser an dem Schälgut zur Anlage gebracht und in einer Schälrichtung relativ zu dem Schälgut bewegt wird. Als Schälmesser werden dabei vorzugsweise handelsübliche Schälmesser verwendet, wie sie auch bei handbetätigten Schälmessern für Obst und Gemüse verwendet werden. Dabei ist vorgesehen, dass wenigstens eines der Schälmesser der wenigstens drei Schäleinheiten drehbar in Bezug auf die Schälrichtung gelagert ist.

Die drehbare Lagerung wenigstens eines der Schälmesser ermöglicht, dass die Punkte, an denen die Schälmesser an der Oberfläche des Schälguts angreifen in einer Ebene, vorzugsweise in einer Ebene senkrecht zur Oberfläche des Schälguts, liegen. Ein Verklemmen selbst krummer Spargelstangen an den Schälmessern der erfindungsgemäßen Schälvorrichtung ist nahezu ausgeschlossen, wenn die Schälmesser in einer Ebene an dem Gemüsestück angreifen.

Greifen mehrere Schälmesser in üblicher Weise in einer Ebene an einem Schälgut an, so bestimmt sich der minimale Durchmesser eines Gemüsestücks, welches gerade noch mit der Schälvorrichtung geschält werden kann, nach den Abmessungen der Schälmesser quer zur Schälrichtung bzw. in etwa nach der Länge der Schälkante. Die drehbare Lagerung wenigstens eines der Schälmesser ermöglicht, dass die Punkte der Schälmesser, die an der Oberfläche des Schälguts zur Anlage gebracht werden, näher zusammengebracht werden können. Die Abmessungen der Schälmesser quer zur Schälrichtung bzw. die Länge der Schälkanten spielen dabei nur noch eine untergeordnete Rolle.

Vorteilhafte Ausgestaltungen der Erfindung sind Gegenstand der Unteransprüche.

Gemäß einer ersten Ausführungsform der Erfindung ist vorgesehen, dass die Schälmesser aller Schäleinheiten der Schälvorrichtung in Bezug auf die Schälrichtung drehbar gelagert sind. Dadurch können alle Schälmesser gegeneinander verdreht werden, wodurch die Schälmesser in den Punkten, die an dem Schälgut angreifen sollen, noch näher zusammengebracht werden können, wodurch auch Gemüsestücke mit sehr kleinem Durchmesser problemlos mittels der erfindungsgemäßen Schälvorrichtung geschält werden können. Die einzelnen Schälmesser sind vorzugsweise derart drehbar gelagert, dass die Schälmesser bzw. die Schälkanten der Schälmesser, mit der Schälrichtung, das heißt in der Richtung, in der die Schälmesser bewegt werden, einen Winkel zwischen 90°, bei dem eine Schälkante des Schälmessers senkrecht zu der Schälrichtung verläuft, und 0°, bei dem die Schälkante parallel zu der Schälrichtung verläuft, einschließen. Ein Winkel von 0° bildet dabei den Grenzwert, bei dem keine Schale mehr von der Oberfläche des Schälguts abgehoben wird.

Durch die drehbare Lagerung können die Schälmesser abhängig von der Dicke des Schälguts mehr oder weniger stark in Bezug auf die Schälrichtung gedreht werden. Bei sehr dünnem Schälgut sind die Schälmesser stark gegenüber der Schälrichtung zu verdrehen, um ein Berühren der in einer Ebene angeordneten Schälmesser zu verhindern, während bei einem Schälgut mit einem größeren Durchmesser die Schälmesser weniger stark gegenüber der Schälrichtung gedreht werden müssen, um ein Berühren des Schälmesser zu verhindern.

Bei einer erfindungsgemäßen Schälvorrichtung nach Anspruch 4 ist vorgesehen, wenigstens eines der Schälmesser, vorzugsweise aber alle Schälmesser, von vornherein schräg in Bezug auf die Schälrichtung zu lagern, um zu verhindern, dass sich die Schälmesser berühren, wenn sie in einer Ebene an dem Schälgut zur Anlage gebracht werden. Zwischen Schälkanten der Schälmesser und der Schälrichtung ist dabei ein Winkel zwischen 90°, bei dem die Schälkante senkrecht zu der Schälrichtung verläuft, und 0°, bei dem die Schälkante parallel zu der Schälrichtung verläuft, gebildet.

Erfindungsgemäß ist der Winkel, den die Schälmesser mit der Schälrichtung einschließen, einstellbar, um die Schälvorrichtung an das Schälen verschiedener Schälgüter anpassen zu können. Die Schälmesser sind dazu vorzugsweise drehbar gegenüber der Schälrichtung gelagert, um ein einfaches Einstellen des Winkels zu ermöglichen.

Die Schäleinheiten mit den Schälmessern sind vorzugsweise in gleichen Winkelabständen an einer Halterung angeordnet, wobei die Halterung in Schälrichtung verschiebbar gelagert ist. Werden die Schälmesser an einem Schälgut zur Anlage gebracht und wird die Halterung anschließend in Schälrichtung verfahren, schält jedes Schälmesser einen streifenförmigen Teil der Oberfläche des Schälguts ab. Bei Spargel beträgt die Anzahl der abzuschälenden Streifen erfahrungsgemäß etwa acht, um den Spargel völlig zu schälen. Vorzugsweise sind daher vier Schäleinheiten mit jeweils einem Schälmesser vorhanden, so dass mit der erfindungsgemäßen Schälvorrichtung zwei Schälvorgänge erforderlich sind, um den Spargel vollständig zu schälen. Entweder der Spargel oder die Halterung mit den Schäleinheiten ist zwischen den beiden Schälvorgängen um einen Winkel von 45° in radialer Richtung zu drehen, um mit den Schälmessern jeden Teil der Oberfläche einmal zu erfassen.

Die Schälmesser sind vorzugsweise durch eine Haltevorrichtung jeder Schäleinheit gehalten. Die Haltevorrichtung ist vorzugsweise U-förmig oder V-förmig und lagert das Schälmesser beiderends in Verlängerung der Schälkante. Gemäß einer Ausführungsform der Erfindung ist dabei vorgesehen, das Schälmesser schwenkbar gegenüber der Halterung zu lagern. Die schwenkbare Lagerung des Schälmessers an der Haltevorrichtung ermöglicht, dass das Schälmesser Unebenheiten der Oberfläche des Schälguts ausgleichen kann und nicht an Erhebungen der Oberfläche stecken bleibt. Die schwenkbare Lagerung der Schälmesser in Verlängerung zur Schälkante ist aus dem genannten Grund auch bei handelsüblichen handbetätigten Obst- und Gemüseschälern vorhanden.

Die Haltevorrichtung der Schälmesser ist bei einer Ausführungsform der Erfindung durch eine Welle gehalten, welche im Wesentlichen senkrecht zu dem Schälmesser verläuft, wobei die Welle jeder Schäleinheit in einer Aufnahme der Schäleinheit aufgenommen ist und wobei diese Aufnahme - gegebenenfalls über Zwischenstücke - an der Halterung befestigt ist. Die Welle ist in der Aufnahme drehbar um ihre Längsachse gelagert und ermöglicht so die drehbare Lagerung jedes Schälmessers in Bezug auf die Schälrichtung.

Für Ausführungsformen, bei denen die Schälmesser von vornherein schräg in Bezug auf die Schälrichtung angeordnet sind, ist eine drehbare Lagerung der Welle nicht unbedingt erforderlich, eine drehbare Lagerung ist jedoch vorteilhaft, um die Winkel zwischen den Schälmessern und der Schälrichtung einstellen zu können.

Jede Welle ist dabei vorzugsweise auch in ihrer Längsrichtung verschiebbar in der Aufnahme gelagert, um das an einem vorderen Ende der Welle mittels der Haltevorrichtung angeordnete Schälmesser an einem Schälgut zur Anlage bringen zu können.

Um das Schälmesser an dem Schälgut zur Anlage bringen zu können, ist ein Vorschubmechanismus für jede Welle vorgesehen. Der Vorschubmechanismus ist derart gestaltet, dass er die Welle, und damit das an deren Ende angeordnete Schälmesser zu Beginn und während des Schälvorgangs gegen die Oberfläche des Schälguts drückt und am Ende des Schälvorgangs, nach dem die Schälmesser in Schälrichtung entlang des Schälguts bewegt wurden, zurückzieht, um die Schäleinheiten wieder in die Ausgangsposition für einen erneuten Schälvorgang zu bringen.

Der Vorschubmechanismus weist vorzugsweise eine Feder auf, welche auf die Welle entweder eine Kraft in Richtung auf das Schälgut oder weg von dem Schälgut ausübt. Wirkt die Feder in Richtung des Schälguts ist ein Mechanismus erforderlich, der am Ende des Schälvorgangs eine Gegenkraft ausübt, um die Welle bzw. das Schälmesser von dem Schälgut zurückzuziehen. Wirkt die Feder weg von dem Schälgut, ist ein Mechanismus erforderlich, der zu Beginn des Schälvorgangs und während des Schälvorgangs eine Gegenkraft ausübt und die Welle bzw. das Schälmesser gegen das Schälgut drückt. Als Mechanismus zur Erzeugung einer derartigen Gegenkraft ist vorzugsweise ein Magnetpaar vorgesehen, wobei einer der beiden Magneten an der Welle angeordnet ist und wobei einer der beiden Magneten weiterhin als Elektromagnet ausgebildet ist, um die Gegenkraft bedarfsgerecht zu erzeugen.

Gemäß einer weiteren Ausführungsform ist vorgesehen, die Gegenkraft zu der Feder mittels eines pneumatischen Zylinders zu erzeugen, der bedarfsweise mit Druckluft beaufschlagt wird. Selbstverständlich können auch zwei pneumatische Zylinder oder ein pneumatischer Zylinder, der in der Lage ist, Kräfte in beide Axialrichtungen der Welle zu erzeugen, vorgesehen werden, um eine Vorschubbewegung der Welle zu erzeugen. Weiterhin ist eine Kombination aus Pneumatikzylinder und Magnetpaar oder eine Verwendung von zwei Magnetpaaren zur Erzeugung entsprechender Kräfte möglich.

Vorzugsweise ist eine Linearbewegung der Welle fest an eine Drehbewegung der Welle gekoppelt, das heißt pro.Längeneinheit, um welche das Schälmesser auf das Schälgut zubewegt oder von diesem wegbewegt wird, wird die Welle, und damit das Schälmesser, um einen bestimmten Winkel gedreht. Dies erfolgt vorzugsweise dadurch, dass die Welle an Ihrer Oberfläche einen in radialer Richtung verlaufenden Zapfen aufweist und wobei die Welle auf einem Teil ihrer Länge von einer Hülse umgeben ist, die eine schraubenförmige Aussparung aufweist, in welcher der Zapfen der Welle geführt ist.

Gegenstand der Erfindung ist des Weiteren ein Verfahren zum Schälen von Obst und Gemüse.

Die vorliegende Erfindung wird nachfolgend anhand von Ausführungsbeispielen in Figuren näher erläutert. Es zeigen:
- Fig. 1: eine erfindungsgemäße Schälvorrichtung mit vier Schäleinheiten in zwei verschiedenen perspektivischen Ansichten;
- Fig. 2: Halterung einer erfindungsgemäßen Schälvorrichtung mit vier Schäleinheiten in Seitenansicht und in perspektivischer Ansicht bei jeweils verschiedenen Stellungen der Schälmesser;
- Fig. 3: Querschnitt durch eine Schäleinheit gemäß der Erfindung;
- Fig. 4: perspektivische Ansicht einer Welle mit Haltevorrichtung und Schälmesser, wobei die Welle auf einem Teil ihrer Länge von einer Hülse umgeben ist;
- Fig. 5: perspektivische Ansicht einer Welle mit einer Haltevorrichtung und einem Schälmesser;
- Fig. 6: Halterung einer erfindungsgemäßen Schälvorrichtung mit drei Schäleinheiten;
- Fig. 7: Welle mit Haltevorrichtung und Schälmesser gemäß einer weiteren Ausführungsform der Erfindung.

In den Figuren bezeichnen, sofern nicht anders angegeben, gleiche Bezugszeichen gleiche Teile mit gleicher Bedeutung.

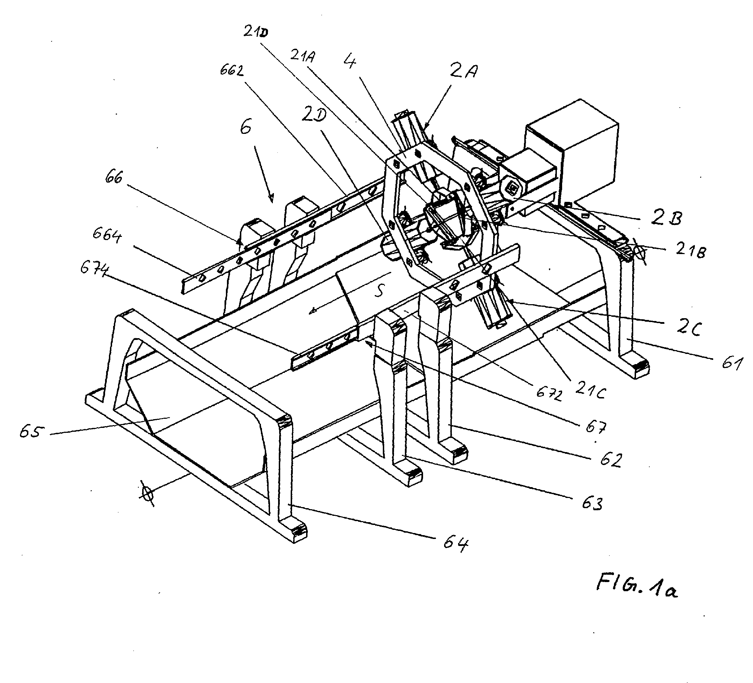

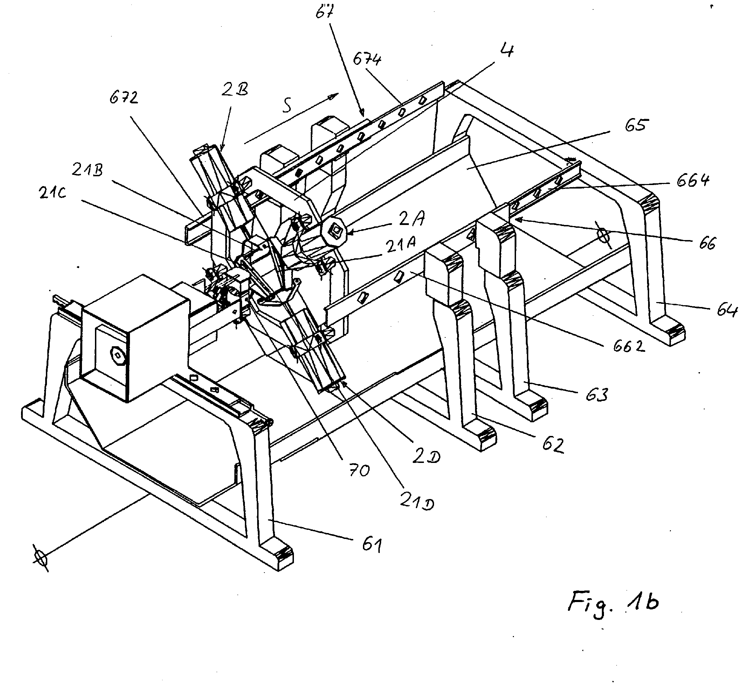

Figur 1 zeigt eine erfindungsgemäße Schälvorrichtung für langgestreckte Schälgüter, insbesondere für Obst und Gemüse, wie zum Beispiel Spargel, in perspektivischer Ansicht aus zwei verschiedenen Richtungen. Die Schälvorrichtung weist eine Aufnahme 70 auf, um den Spargel an einem Ende während des Schälvorgangs einzuspannen, wobei sich der einerends in der Aufnahme 70 aufgenommene Spargel im Wesentlichen in einer Schälrichtung S in der Schälvorrichtung erstreckt. Die dargestellte Aufnahme 70 weist zwei Spannbacken 72 und 74 auf, die jeweils eine konkave Spannfläche aufweisen. Die Spannbacken 72, 74 werden vorzugsweise mittels eines pneumatischen Antriebs oder eines motorischen Antriebs aufeinander zu und voneinander wegbewegt, um einen Spargel einzuspannen und freizugeben.

Die Schälvorrichtung weist weiterhin vier Schäleinheiten 2A, 2B, 2C, 2D auf, die an einer Halterung 4 angeordnet sind, wobei die Halterung 4 in dem Ausführungsbeispiel als geschlossener achteckiger Rahmen ausgebildet ist. Die Schäleinheiten sind in gleichmäßigen Winkelabständen, das heißt in Abständen von 90°, an der Halterung 4 befestigt. Die vier Schäleinheiten sind an der Halterung 4 in einer senkrecht zu der Schälrichtung S stehenden Ebene befestigt.

An einem vorderen Ende jeder Schäleinheit 2A, 2B, 2C, 2D ist jeweils ein Schälmesser 21A, 21B, 21C, 21D angeordnet. Diese Schälmesser 21A, 21B, 21C, 21D sind dazu ausgebildet, die Schale eines in die Aufnahme 70 eingespannten Spargels abzuschälen, wenn die Schälmesser 21A, 21B, 21C, 21D in Schälrichtung S relativ zu dem Spargel bewegt werden. Um die Schälmesser 21A, 21B, 21C, 21D relativ zu dem Spargel zu bewegen, ist in dem dargestellten Ausführungsbeispiel die Halterung 4 mittels eines nicht näher dargestellten Antriebs an Schienen 66, 67 in Schälrichtung S bewegbar. Die Schienen 66, 67 weisen dabei jeweils ein Schienenpaar 662, 664; 672, 674 auf, wobei eine äußere Schiene 662, 672 an einem Gestell 62, 63 befestigt ist und wobei eine innere Schiene 664, 674, an welcher die Halterung 4 befestigt ist, gleitend in der äußeren Schiene 662, 672 gelagert ist.

Selbstverständlich könnte auch die Halterung 4 fest angeordnet sein und stattdessen die Aufnahme 70 in Schälrichtung S verschiebbar gelagert sein.

Durch die Befestigung der Schäleinheiten 2A, 2B, 2C, 2D an dem senkrecht zur Schälrichtung S liegenden Rahmen liegen die Angriffspunkte der Schälmesser 21A, 21B, 21C, 21D an dem zu schälenden Spargel in einer Ebene. Der Spargel wird dadurch neben der Aufnahme 70 durch die erfindungsgemäße Schälvorrichtung während des Schälvorgangs nur an einem Punkt gehalten. Ein so gehaltener Spargel kann sich quer zur Schälrichtung S verbiegen, wodurch mit der erfindungsgemäßen Schälvorrichtung auch nicht ganz gerader Spargel geschält werden kann, ohne dass der Spargel bricht, während des Schälvorgangs beschädigt wird oder sich der Spargel während des Schälvorgangs an den Schälmessern 21A, 21B, 21C, 21D verklemmt.

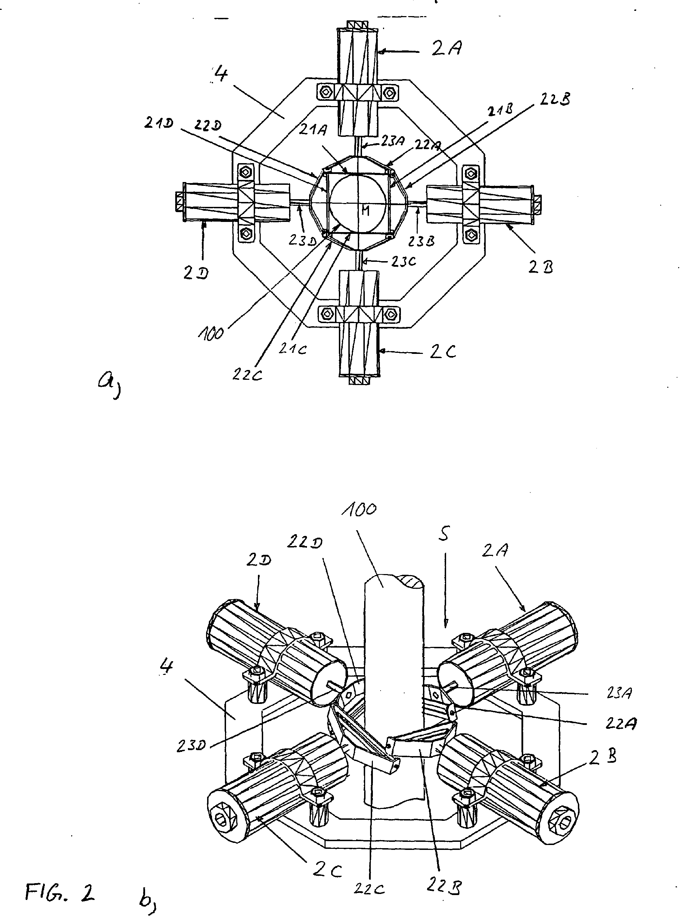

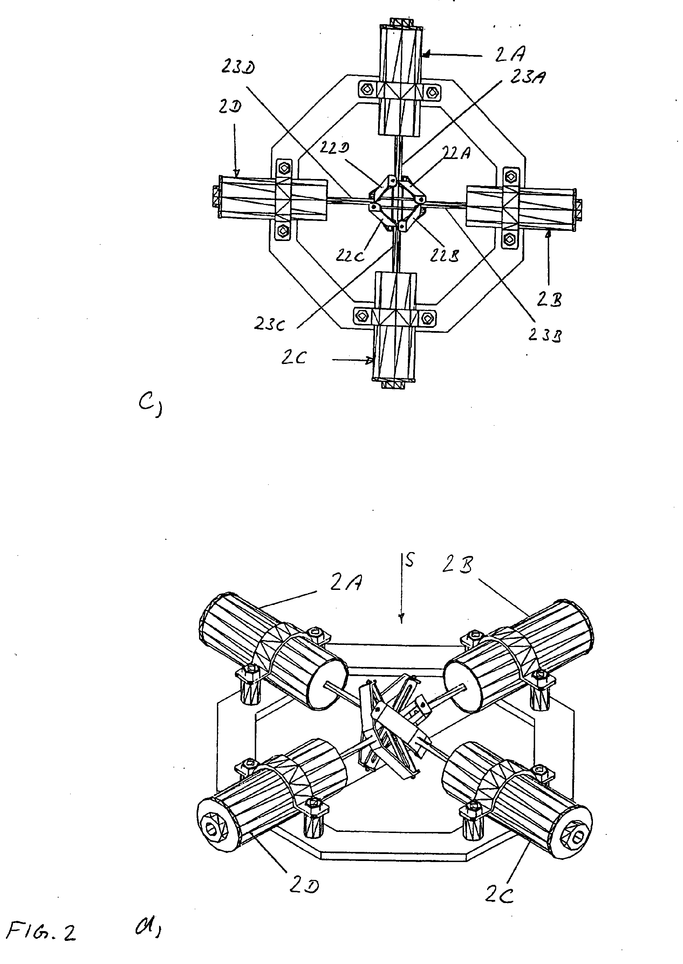

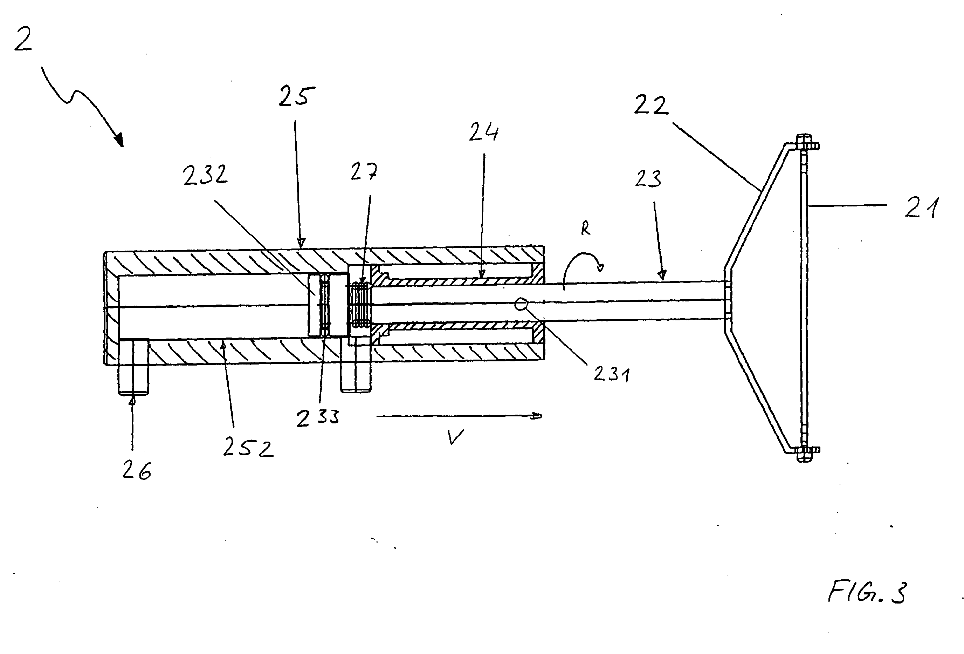

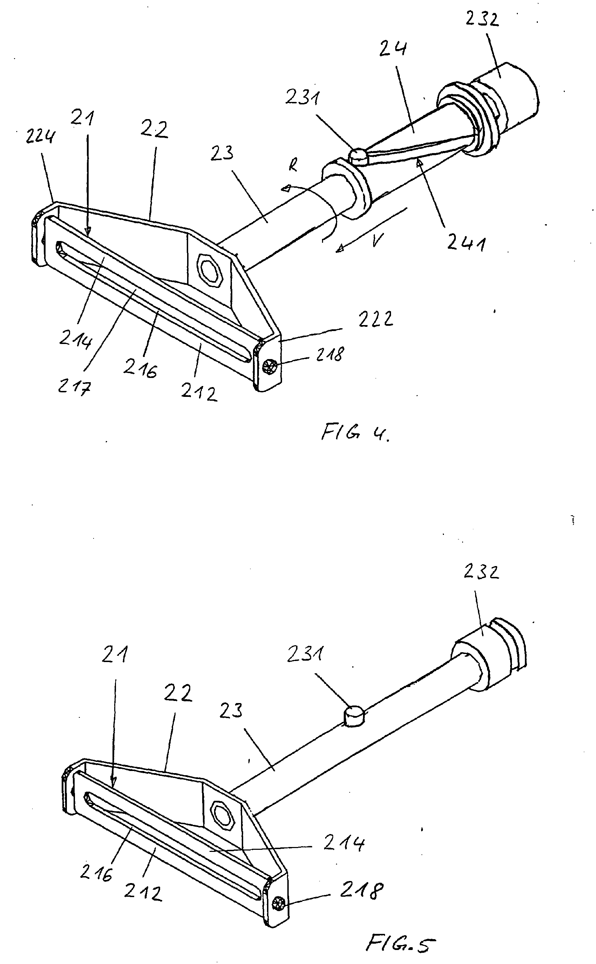

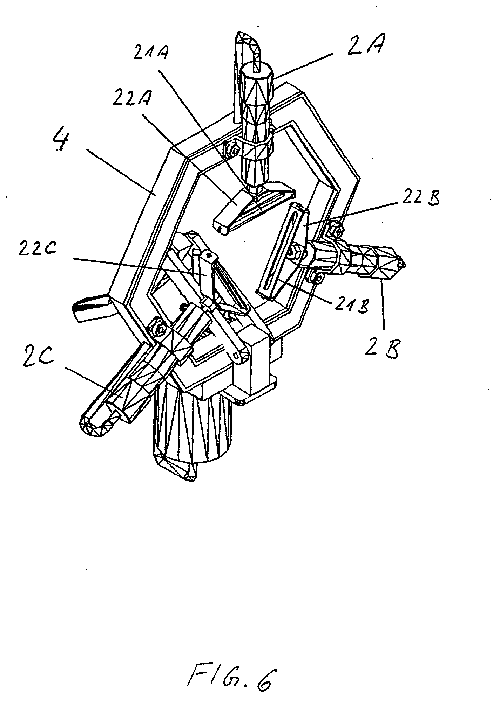

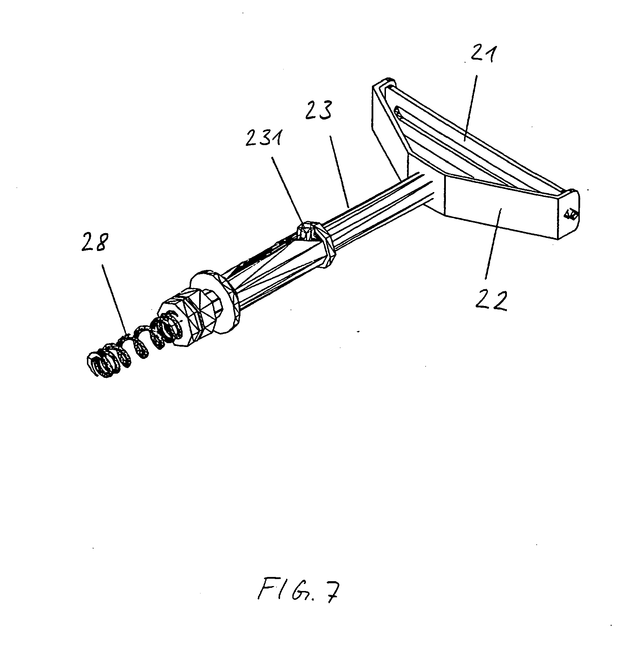

Um zu verhindern, dass die Schälmesser 21A, 21B, 21C, die in einer Ebene an dem zu schälenden Spargel angreifen, sich gegenseitig behindern, sind die Schälmesser 21A, 21B, 21C erfindungsgemäß drehbar in Bezug auf die Schälrichtung S gelagert. Die Anordnung der Schäleinheiten 2A, 2B, 2C, 2D an der Halterung 4 und der Aufbau einer Schäleinheit der Erfindung wird nachfolgend anhand der Figuren 2 bis 5 erläutert. In den Figuren 2 bis 5 entsprechen Bauteile, deren Bezugszeichen die Buchstaben A bis D angefügt sind, den Bauteilen, die ein entsprechendes Bezugszeichen ohne Buchstaben zur Unterscheidung aufweisen.

Die Figuren 2a bis 2d zeigen die Halterung 4 mit den daran befestigten Schäleinheiten 2A, 2B, 2C, 2D jeweils in Draufsicht und in perspektivischer Ansicht in zwei verschiedenen Stellungen der Schälmesser 21A, 21B, 21C, 21D. Zur Veranschaulichung ist in Fig. 2b ein Ausschnitt eines Schälguts 100, insbesondere eines Spargels, eingezeichnet.

Das Schälmesser 21A, 21B, 21C, 21D jeder Schäleinheit 2A, 2B, 2C, 2D ist in den dargestellten Ausführungsbeispielen durch jeweils eine Haltevorrichtung 22A, 22B, 22C, 22D jeder Schäleinheit 2A, 2B, 2C, 2D gehalten, wobei die Haltevorrichtung 22A, 22B, 22C, 22D das Schälmesser 21A, 21B, 21C, 21D beiderends lagert.

Der Aufbau eines Schälmessers 21 und dessen Lagerung an der Haltevorrichtung 22 gemäß einer Ausführungsform der Erfindung ist anhand der Figuren 4 und 5 ersichtlich. Das Schälmesser 21 ist vorzugsweise ein handelsübliches Schälmesser, wie es auch in handbetätigten Obst- und Gemüseschälern verwendet wird, welche im Haushaltswarengeschäft erhältlich sind. Es weist ein Messerstück 212 mit einer Schälkante 216 auf, wobei das Messerstück 212 mit der Schälkante 216 ein Stück in die Oberfläche des Schälguts eindringt und dessen Haut oder Schale abschält, wenn das Schälmesser 21 an der Oberfläche des Schälguts zur Anlage und derart in einer Schälrichtung entlang der Oberfläche geführt wird, dass die Schälkante 216 senkrecht zu der Schälrichtung verläuft oder mit der Schälrichtung einen Winkel zwischen 90° und 0°, idealerweise zwischen 90° und 45°, einschließt, wobei ein Winkel von 0° den Grenzfall darstellt, bei welchem die Schälkante 216 parallel zu dem Schälgut geführt wird, wobei dann kein Schälergebnis mehr erzielt wird.

Um zu verhindern, dass das Schälmesser 212 mit der Schälkante 216 zu tief in das Schälgut eindringt, ist an dem Schälmesser 21 ein Element 214 vorgesehen, welches die Eindringtiefe des Messerstücks 214 begrenzt. Dieses Element 214 ist wie das Messerstück 212 ein flaches Element, vorzugsweise aus Metall, welches sowohl in der Schälrichtung als auch parallel zur Schälrichtung versetzt zu dem Messerstück 212 angeordnet ist. Der Versatz zwischen dem Messerstück 212 und dem Element 214 parallel zur Schälrichtung bestimmt die Eindringtiefe des Messerstücks 212 in das Schälgut. Vorzugsweise sind das Messerstück 212 und das Element 214 einstückig aus einem flachen Metall gebildet, wobei zur Trennung des Messerstücks 212 und des Elements 214 eine längliche Aussparung 217 in das Metallelement gestanzt ist und wobei das Element 214 über einen möglichst weiten Bereich gegenüber dem Messerstück 212 gebogen ist, um in diesem Bereich einen Versatz zwischen dem Messerstück 212 und dem Element 214 zu bewirken.

Das langgestreckte Schälmesser 21 ist beiderends durch eine Haltevorrichtung 22 gehalten, die in dem Ausführungsbeispiel aus einem flachen Metall oder Kunststoff im Wesentlichen V-förmig ausgestaltet ist, wobei das Schälmesser 21 durch Zapfen 218 in Aussparungen jeweils eines Schenkels 222, 224 der Haltevorrichtung 22 gelagert ist. Das Schälmesser 22 ist schwenkbar gegenüber der Haltevorrichtung 22 gelagert, wodurch während eines Schälvorgangs Unebenheiten des Schälguts ausgeglichen werden können.

Die Haltevorrichtung 22A, 22B, 22C, 22D, 22 jeder Schäleinheit 2A, 2B, 2C, 2D ist an einer Welle 23A, 23B, 23C, 23D, 23 der Schäleinheit 2A, 2B, 2C, 2D befestigt, wobei die Welle 23A, 23B, 23C, 23D, 23 im Wesentlichen senkrecht zu dem Schälmesser 21A, 21B, 21C, 21D, 21 bzw. dessen Schälkante 216, verläuft. Die Welle 23A, 23B, 23C, 23D jeder Schäleinheit 2A, 2B, 2C, 2D ist sowohl in ihrer Längsrichtung verschiebbar als auch um ihre Längsachse drehbar gelagert. Die Schäleinheiten 2A, 2B, 2C, 2D sind dabei derart angeordnet, dass die Längsachsen der Wellen 23A, 23B, 23C, 23D in einer Ebene, vorzugsweise in einer Ebene senkrecht zur Schälrichtung S liegen und dass sich die Längsachsen der Wellen 23A, 23B, 23C, 23D in einem gemeinsamen Punkt M schneiden.

Die verschiebbare Lagerung der Wellen 23A, 23B, 23C, 23D ermöglicht, dass die Schälmesser 21A, 21B, 21C, 21D an Schälgut 100 unterschiedlichen Durchmessers zur Anlage gebracht werden kann. Die drehbare Lagerung der Wellen 23A, 23B, 23C, 23D ermöglicht dabei ein Verdrehen der Schälmesser 21A, 21B, 21C, 21D, bzw. der Schälkanten 216 der Schälmesser, in Bezug auf die Schälrichtung S, um zu verhindern, dass sich die Schälmesser 21A, 21B, 21C, 21D während des Schälvorgangs gegenseitig berühren. Die Schälmesser 21A, 21B, 21C, 21D werden dabei gleichsinnig, das heißt entweder alle im Uhrzeigersinn oder alle gegen den Uhrzeigersinn, gedreht. Die Schälmesser 21A, 21B, 21C, 21D samt Haltevorrichtungen 22A, 22B, 22C, 22D werden dabei um so weiter gedreht, je geringer der Durchmesser des Schälgutes 100 ist und je geringer daher der gegenseitige Abstand der Angriffspunkte der Schälmesser 21A, 21B, 21C, 21D an dem Schälgut 100 ist. Dies wird insbesondere aus den Figuren 2b und 2d ersichtlich, wobei die Schälmesser 21A, 21B, 21C, 21D in Fig. 2b zum Schälen eines dickeren Schälguts 100 als in Fig. 2d ausgerichtet und daher in Fig. 2b weniger stark als in Fig. 2d gegenüber der Schälrichtung S gedreht sind. Vorzugsweise beträgt der Winkel, um den die Schälmesser 21A, 21B, 21C, 21D gegenüber der Schälrichtung S gedreht sind maximal 45°.

Eine Vorschubbewegung der Wellen 23A, 23B, 23C, 23D entlang ihrer Längsachse und eine Drehbewegung der Wellen 23A, 23B, 23C, 23D um ihre Längsachse sind vorzugsweise fest miteinander gekoppelt, um bei einem größeren Vorschub, der bei einem Schälgut 100 mit kleinem Durchmesser erforderlich ist, eine stärkere Drehung der Schälmesser 21A, 21B, 21C, 21D zu bewirken als bei einem geringeren Vorschub, der zum Schälen eines Schälguts 100 mit größerem Durchmesser erforderlich ist.

Bei einer nicht in den Figuren dargestellten Ausführungsform der erfindungsgemäßen Schälvorrichtung sind die Schälmesser 21A, 21B, 21C, 21D von vornherein schräg gegenüber der Schälrichtung S angeordnet. Eine Zwangskopplung der Vorschubbewegung mit einer Drehbewegung der Wellen ist dabei nicht erforderlich. Es ist lediglich eine Vorschubbewegung der Wellen erforderlich, um die immer den gleichen Winkel gegenüber der Schälrichtung aufweisenden Schälmesser an dem Schälgut zur Anlage bringen zu können. Die Voreinstellung des Winkels zwisschen Schälmesser und Schälrichtung richtet sich dabei nach dem Durchmesser de Schälguts. Die Wellen sind vorzugsweise auch bei dieser Ausführungsform drehbar gelagert, um die Einstellung des Winkels zu ermöglichen.

Fig. 3 zeigt einen Querschnitt durch eine erfindungsgemäße Schäleinheit 2 mit einem durch eine Haltevorrichtung 22 gehaltenen Schälmesser 21, wobei die Haltevorrichtung 22 an einer Welle 23 befestigt ist. Die Schäleinheit 2 weist eine zylinderförmige Hülse 25 auf, in der die Welle 23 aufgenommen ist. Die Welle 23 ist dabei über einen Teil ihrer Länge in einer zweiten Hülse 24 aufgenommen die in den vorderen Teil der Hülse 25 eingesetzt ist. Die Welle 23 weist an Ihrer Oberfläche einen radial nach außen stehenden Zapfen 231 auf, welcher in einer sich über die Länge der Hülse 24 erstreckenden Aussparung 241 gleitet, wie insbesondere aus Fig. 4 ersichtlich ist. Die Aussparung 241 läuft nach Art einer Schraubenlinie mit großer Steigung an der Hülse 24, wobei in dem dargestellten Ausführungsbeispiel in Fig. 4 die Aussparung 241 über die gesamte Länge der Hülse 24 einen Winkel von 90° übersteigt. Die Zwangsführung des Zapfens 231 in der Aussparung 241 der Hülse 24 bewirkt, dass bei Verschieben der Welle 23 in eine Richtung V, bzw. entgegengesetzt dazu, die Welle 23 immer auch in einer Richtung R oder entgegengesetzt, um ihre Längsachse gedreht wird. Dieser Vorgang ist unabhängig davon, ob ein Mechanismus zum Drehen der Welle oder ein Mechanismus zum Verschieben der Welle 23 vorgesehen ist.

Bei dem in Fig. 3 dargestellten Ausführungsbeispiel ist ein Vorschubmechanismus vorgesehen, um die Welle 23 linear zu verschieben, wobei mit der linearen Verschiebung auch eine Drehung der Welle 23 einhergeht.

Als Vorschubmechanismus ist in dem Ausführungsbeispiel gemäß Fig. 3 im hinteren Ende der Hülse 24 ein Hohlraum 25 ausgebildet, der an einem vorderen Ende durch die Welle 23 bzw. ein Abschlussstück 232 der Welle 23 abgeschlossen ist. Das Abschlussstück 232 liegt an den Seitenflächen des Hohlraums 25 an und ist an diesen Seitenflächen 25 verschiebbar gelagert. Der Hohlraum 25 ist mit einem Anschluss 26 mit Druckluft beaufschlagbar, um die Welle 23 in der Vorschubrichtung V zu verschieben und um dadurch das Schälmesser 21 an einem Schälgut 100 zur Anlage zu bringen. Eine in eine ringförmige Nut des Abschlussstücks 232 eingesetzte Dichtung 233 dichtet den Hohlraum 25 ab und verhindert ein Entweichen der Druckluft in Richtung der Welle 23.

Zur Erzeugung einer Gegenkraft ist eine Spiralfeder 27 vorgesehen, welche die Welle 23 an einem hinteren Ende umgibt und welche zwischen einem Ansatz 242 der Hülse 24 und dem Abschlussstück 232 der Welle 23 anliegt. Bei dem Ausführungsbeispiel gem. Fig. 3, bei dem die Welle 23 maximal in Richtung V verschoben ist, ist die Spiralfeder 27 zusammengedrückt. Soll das Schälmesser 21 nach Ende des Schälvorgangs von dem Schälgut 100 wegbewegt werden, wird der Luftdruck in dem Hohlraum 25 über das Ventil 26 abgesenkt und die sich entspannende Feder 27 bewirkt, dass die Welle 23 entgegen der Vorschubrichtung V zurückbewegt wird.

Selbstverständlich besteht auch die Möglichkeit, mittels einer Feder eine Kraft in der Vorschubrichtung V auf die Welle 23 auszuüben, wie dies für eine Welle 23 in Fig. 7 dargestellt ist und eine Gegenkraft zu der Feder 28 mittels eines Pneumatikzylinders zu erzeugen.

Eine Zwangskopplung von linearer Vorschubbewegung und Drehbewegung findet bei der Schäleinheit nach den Figuren 3 bis 5 nicht statt, wenn die Nut parallel zur Längsrichtung der Welle 23 verläuft oder wenn auf den Zapfen 231 an der Welle 23 und damit auch auf die Nut 241 in der Hülse 24 ganz verzichtet wird.

Durch die Lage einer parallel verlaufenden Nut kann der Winkel zwischen dem Schälmesser 21, bzw. dessen Schälkante 216, und der Schälrichtung S von vorneherein fest eingestellt werden. Der Zapfen und die zu der Welle parallel verlaufenden Nut verhindern dabai ein Verdrehen der Welle. Vorzugsweise sind dabei zwei oder mehr parallel verlaufende Nuten vorgesehen, in die der Zapfen je nach gewünschter Winkellage einführbar ist. Die Nuten können dabei durch eine radial verlaufende Nut verbunden sein, wobei der der Zapfen von einem Benutzer durch Drehen der Welle über die radiale Nut von einer Parallelnut in eine andere Parallelnut geführt werden kann. Die radiale Nut befindet sich dabei vorzugsweise an einer Position der Hülse, die von dem Zapfen während des normalen Betriebs, d.h. den normalen Vor- und Zurückbewegungen der Welle am Anfang und Ende der Schälvorgänge, nicht passiert wird. Vorzugsweise befindet sich die radiale Verbindungsnut daher am vorderen oder hinteren Ende der Nut, wobei der Zapfen von einem Benutzer durch weites Herausziehen oder weites Hineinschieben der Welle in die Hülse und Drehen der Welle von einer Parallelnut in einen andere Parallelnut überführt werden kann.

Wir auf die Nut und den Zapfen ganz verzichtet, bleibt die Welle 23 in der Hülse 24 grundsätzlich drehbar, es sind jedoch andere Mittel vorzusehen, die ein Verdrehen der Welle verhindern.

Selbstverständlich sind im Zusammenhang mit der erfindungsgemäßen Schälvorrichtung beliebige Vorschubmechanismen, insbesondere Linearantriebe denkbar, die dazu geeignet sind, die Welle 23 mit dem am vorderen Ende angeordneten Schälmesser 21 bedarfsgerecht auf das Schälgut zu und von diesem wegzubewegen. Der Vorschubmechanismus ist dabei insbesondere derart ausgestaltet, dass stets ein definierter Anpressdruck des Schälmessers 21 an das Schälgut erfolgt. Dieser Anpressdruck ist bei dem Ausführungsbeispiel in Fig. 3 über den Luftdruck in dem Hohlraum 25 einstellbar. Dadurch ist gewährleistet, dass das Schälmesser 21 auch bei Unebenheiten an der Oberfläche des Schälguts gepresst wird, um ein gleichmäßiges Schälergebnis zu erreichen.

Fig. 6 zeigt ein Ausführungsbeispiel eines Rahmens 4, an dem drei Schäleinheiten 2A, 2B, 2C jeweils in einem Winkelabstand von 120° angeordnet sind.

Zum Schälen von Spargel mittels der erfindungsgemäßen Schälvorrichtung wird ein Spargel in die Aufnahme 70 eingesetzt. Die Halterung 4 mit den Schäleinheiten 2A, 2B, 2C, 2D wird dann so weit wie möglich an die Aufnahme 70 herangefahren, wobei anschließend die Schälmesser 21A, 21B, 21C, 21D durch eine Vorschubbewegung der Wellen 23A, 23B, 23C, 23D an der Oberfläche des Spargels zur Anlage gebracht werden. Die Schälmesser 21A, 21B, 21C, 21D werden dabei so weit gedreht, dass sie sich nicht gegenseitig berühren und dass die Schälmesser 21A, 21B, 21C, 21D dennoch in einer Ebene an dem Spargel anliegen. Bei Spargel mit geringem Durchmesser werden die Schälmesser stärker in Bezug auf die Schälrichtung S gedreht als bei Spargel mit einem größerem Durchmesser. Nachdem die Schälmesser 21A, 21B, 21C, 21D an dem Spargel zur Anlage gebracht wurden, wird die Halterung 4 mit den Schäleinheiten 2A, 2B, 2C, 2D in Schälrichtung S verfahren, bis die Spargelspitze erreicht ist. Danach werden die Schälmesser 21A, 21B, 21C, 21D von dem Spargel weggenommen, was dadurch erfolgt, dass die Wellen 23A, 23B, 23C, 23D in die Aufnahmen 25 zurückgefahren werden. Da ein Spargel erfahrungsgemäß durch Abschälen von vier Schalenstreifen noch nicht geschält ist, ist üblicherweise ein weiterer Schälvorgang notwendig, für den die Schäleinheiten 2A, 2B, 2C, 2D wieder an den Ausgangspunkt zurückgefahren werden, wobei entweder der Spargel oder die Schäleinheit 2A, 2B, 2C, 2D in radialer Richtung gedreht werden, um beim nächsten Schälvorgang die Teile der Oberfläche abzuschälen, die bislang noch nicht erreicht wurden.

Abfallende Schalenteile werden bei der erfindungsgemäßen Schälvorrichtung durch eine unterhalb der Schäleinheiten 2A, 2B, 2C, 2D angeordnete Auffangwanne 65 aufgefangen.

Wenngleich die Beschreibung der Erfindung unter Bezugnahme auf Obst und Gemüse, insbesondere Spargel erfolgt ist, ist die Erfindung nicht auf das Schälen von Obst und Gemüse beschränkt, sondern kann für beliebige langgestreckte Schälgüter, wie zum Beispiel Holz, verwendet werden, wenn die Messer und äußeren Abmessungen entsprechend dimensioniert sind.

### Bezugszeichenliste

- 2: Schäleinheit
- 2A, 2B, 2C, 2D: Schäleinheit
- 21: Schälmesser
- 21A, 21B, 21C, 21D: Schälmesser
- 22: Haltevorrichtung
- 22A, 22B, 22C, 22D: Haltevorrichtung
- 23: Welle
- 23A, 23B, 23C, 23D: Welle
- 24: Hülse
- 231: Zapfen der Welle
- 241: Aussparung der Hülse
- 232: Endstück der Welle
- 222, 224: Schenkel der Haltevorrichtung
- 214: Distanzelement
- 216: Schälkante
- 212: Messerstück
- 217: Aussparung
- 25: Hülse
- 252: Hohlraum
- 26: Luftzufuhr

- S: Schälrichtung
- V: Vorschubrichtung
- R: Drehrichtung

- 66, 67: Schienen
- 662, 672: äußere Schienen
- 664, 674: innere Schienen
- 61, 62, 63, 64: Stützen
- 65: Auffangwanne
- 70: Aufnahme
- 72, 74: Spannbacken
- 6: Gestell der Schälvorrichtung

## Patentansprüche

1. Schälvorrichtung, die folgende Merkmale aufweist:
eine Aufnahme (70) zum Halten des Schälguts;
wenigstens drei Schäleinheiten (2A, 2B, 2C, 2D, 2) mit jeweils einem Schälmesser (21A, 21B, 21C, 21D, 21), das eine Schälkante (216) aufweist und das dazu ausgebildet ist, die Haut, die Schale oder die Rinde eines Schälguts an der Schälkante (216) abzuschälen, wenn das Schälmesser (21A, 21B, 21C, 21D, 21) an dem Schälgut zur Anlege gebracht und in einer Schälrichtung (S) relativ zu dem Schälgut bewegt wird; wobei
wenigstens eines der Schälmesser (21A, 21B, 21C, 21D, 21) derart drehbar in Bezug auf die Schälrichtung (S) gelagert ist, dass die Schälkante (216) mit der Schälrichtung (S) einen Winkel zwischen 90°, bei dem die Schälkante (216) senkrecht zu der Schälrichtung (S) steht, und 0°, bei dem die Schälkante (216) parallel zu der Schälrichtung (S) verläuft, einschließt.

2. Schälvorrichtung nach Anspruch 1,
**dadurch gekennzeichnet, dass**
die Schälmesser (21A, 21B, 21C, 21D, 21) aller Schäleinheiten (2A, 2B, 2C, 2D, 2) drehbar in Bezug auf die Schälrichtung (S) gelagert sind.

3. Schälvorrichtung nach Anspruch 1 oder 2,
**dadurch gekennzeichnet, dass**
die Schälmesser (21A, 21B, 21C, 21D, 21) zwischen einem Winkel von 90°, bei dem eine Schälkante (216) des Schälmessers (21) senkrecht zu der Schälrichtung (S) verläuft, und einem Winkel von 0°, bei dem die Schälkante (216) parallel zu der Schälrichtung verläuft, drehbar gelagert sind.

4. Schälvorrichtung, die folgende Merkmale aufweist:
eine Aufnahme (70) zum Halten des Schälguts;
wenigstens drei Schäleinheiten (2A, 2B, 2C, 2D, D) mit jeweils einem Schälmesser (21A, 21B, 21C, 21D, 21), das eine Schälkante (216) aufweist und das dazu ausgebildet ist, die Haut, Schale oder Rinde eines Schälguts an der Schälkante (216) abzuschälen, wenn das Schälmesser (21A, 21B, 21C, 21D, 21) an dem Schälgut zur Anlage gebracht und in einer Schälrichtung (S) relativ zu dem Schälgut bewegt wird; wobei
wenigstens eines der Schälmesser (21A, 21B, 21C, 21D, 21) derart schräg in bezug auf die Schälrichtung (S) gelagert ist, dass zwischen der Schälkante (216) des Schälmessers (21) und der Schälrichtung (S) ein einstellbarer Winkel zwischen 90°, bei dem die Schälkante (216) senkrecht zu der Schälrichtung (S) steht, und 0° bei dem die Schälkante (216) parallel zu der Schälrichtung (S) verläuft, gebildet ist.

5. Schälvorrichtung nach Anspruch 4,
**dadurch gekennzeichnet, dass**
die Schälmesser (21A, 21B, 21C, 21D, 21) aller Schäleinheiten (2A, 2B, 2C, 2D, 2) schräg in Bezug auf die Schälrichtung (S) gelagert sind.

6. Schälvorrichtung nach Anspruch 4 oder 5,
**dadurch gekennzeichnet, dass**
die Schälmesser (21A, 21B, 21C, 21D, 21) drehbar in Bezug auf die Schälrichtung (S) gelagert sind.

7. Schälvorrichtung nach einem der vorangehenden Ansprüche,
**dadurch gekennzeichnet, dass**
die Schäleinheiten (2A, 2B, 2C, 2D, 2) derart räumlich beabstandet angeordnet sind, dass die Schälmesser (21A, 21B, 21C, 21D, 21) an verschiedenen Punkten einer Oberfläche des Schälguts (100) zur Anlage gebracht werden können.

8. Schälvorrichtung nach Anspruch 7,
**dadurch gekennzeichnet, dass**
die Schäleinheiten (2A, 2B, 2C, 2D, 2) derart angeordnet sind, dass die Ansgriffspunkte der Schälmesser (21A, 21B, 21C, 21D, 21) an einem Schälgut in einer Ebene liegen.

9. Schälvorrichtung nach Anspruch 7 oder 8,
**dadurch gekennzeichnet, dass**
die Schäleinheiten (2A, 2B, 2C, 2D, 2) in gleichen Winkelabständen an einer Halterung (3) angeordnet sind, wobei die Halterung vorzugsweise in Schälrichtung verschiebbar ist.

10. Schälvorrichtung nach einem der vorangehenden Ansprüche,
**dadurch gekennzeichnet, dass**
die Schälmesser (21A, 21B, 21C, 21D, 21) jeweils durch eine Haltevorrichtung (22A, 22B, 22C, 22D, 22) der Schäleinheit (2A, 2B, 2C, 2D, 2) gehalten sind.

11. Schälvorrichtung nach Anspruch 10,
**dadurch gekennzeichnet, dass**
die Schälmesser (21A, 21B, 21C, 21D, 21) parallel zur Schälkante (216) schwenkbar gegenüber der Halterung (22) gelagert sind.

12. Schälvorrichtung nach Anspruch 10 oder 11,
**dadurch gekennzeichnet, dass**
die Haltevorrichtungen (22A, 22B, 22C, 22D, 22) jeweils an einer im Wesentlichen senkrecht zu der Schälkante (216) verlaufenden Welle (23A, 23B, 23C, 23D, 23) befestigt sind.

13. Schälvorrichtung nach Anspruch 12,
**dadurch gekennzeichnet, dass**
die Welle (23A, 23B, 23C, 23D, 23) drehbar um ihre Längsachse gelagert ist.

14. Schälvorrichtung nach Anspruch 12 oder 13,
**dadurch gekennzeichnet, dass**
die Welle (23A, 23B, 23C, 23D, 23) in ihrer Längsrichtung verschiebbar gelagert ist.

15. Schälvorrichtung nach einem der Ansprüche 12 bis 14,
**dadurch gekennzeichnet, dass**
die Wellen (23A, 23B, 23C, 23D, 23) mit den Enden, an denen jeweils das Schälmesser (21A, 21B, 21C, 21D, 21) angeordnet ist, auf einen gemeinsamen Punkt (M) ausgerichtet sind.

16. Schälvorrichtung nach einem der Ansprüche 12 bis 15,
**dadurch gekennzeichnet, dass**
ein Vorschubmechanismus zur Bewirkung einer Verschiebung der Welle in Längsrichtung vorgesehen ist.

17. Schälvorrichtung nach einem der Ansprüche 12 bis 16,
**dadurch gekennzeichnet, dass**
ein Drehmechanismus zur Bewirkung einer Drehbewegung der Welle vorgesehen ist.

18. Schälvorrichtung nach Anspruch 16 und 17,
**dadurch gekennzeichnet, dass**
der Vorschubmechanismus und der Drehmechanismus miteinander gekoppelt sind.

19. Schälvorrichtung nach einem der Ansprüche 12 bis 18,
**dadurch gekennzeichnet, dass**
die Welle einen in radialer Richtung verlaufenden an einer Umfangsfläche angeordneten Zapfen (231) aufweist, wobei der Zapfen (231) in eine schraubenförmige Aussparung (241) einer Hülse (24) eingreift und wobei die Welle (23) und die Hülse (24) in einer Aufnahme (25) der Schäleinheit (2) aufgenommen sind.

20. Schälvorrichtung nach einem der Ansprüche 12 bis 18,
**dadurch gekennzeichnet, dass**
die Welle einen in radialer Richtung verlaufenden an einer Umfangsfläche angeordneten Zapfen (231) aufweist, wobei der Zapfen (231) in eine parallel zu der Welle verlaufenden Aussparung (241) einer Hülse (24) eingreift und wobei die Welle und die Hülse (24) in einer Aufnahme (25) der Schäleinheit (2) aufgenommen sind.

21. Schälvorrichtung nach einem der Ansprüche 16 bis 20,
**dadurch gekennzeichnet , dass**
der Vorschubmechanismus eine an der Welle angreifende Feder (27) aufweist.

22. Schälvorrichtung nach einem der Ansprüche 16 bis 20,
**dadurch gekennzeichnet, dass**
der Vorschubmechanismus ein Magnetpaar mit einem an der Welle angeordneten Magneten aufweist.

23. Schälvorrichtung nach einem der Ansprüche 16 bis 20,
**dadurch gekennzeichnet, dass**
der Vorschubmechanismus einen pneumatisch betätigbaren, an der Welle angreifenden Kolben aufweist.

24. Schälvorrichtung nach einem der vorangehenden Ansprüche,
**dadurch gekennzeichnet, dass**
die Schälvorrichtung eine Einspannvorrichtung (70) zum Einspannen des Schälguts aufweist, wobei die Einspannvorrichtung vorzugsweise drehbar gelagert ist.

## Claims

1. Peeling device which has the following features:
a holder (70) for holding the object to be peeled;
at least three peeling units (2A, 2B, 2C, 2D, 2), each having a peeling blade (21A, 21B, 21C, 21D, 21) which has a peeling edge (216) and is designed to peel off the skin, peel or rind of an object to be peeled against the peeling edge (216) when the peeling blade (21A, 21B, 21C, 21D, 21) is brought to bear against the object to be peeled and is moved in a peeling direction (S) relative to the object to be peeled; wherein
at least one of the peeling blades (21A, 21B, 21C, 21D, 21) is mounted such that it can rotate with respect to the peeling direction (S) in such a way that the peeling edge (216) encloses with the peeling direction (S) an angle of between 90°, at which the peeling edge (216) is perpendicular to the peeling direction (S), and 0°, at which the peeling edge (216) runs parallel to the peeling direction (S).

2. Peeling device according to claim 1, **characterised in that** the peeling blades (21A, 21B, 21C, 21D, 21) of all the peeling units (2A, 2B, 2C, 2D, 2) are mounted such that they can rotate with respect to the peeling direction (S).

3. Peeling device according to claim 1 or 2, **characterised in that** the peeling blades (21A, 21B, 21C, 21D, 21) are mounted such that they can rotate between an angle of 90°, at which a peeling edge (216) of the peeling blade (21) is perpendicular to the peeling direction (S), and an angle of 0°, at which the peeling edge (216) runs parallel to the peeling direction.

4. Peeling device which has the following features:
a holder (70) for holding the object to be peeled;
at least three peeling units (2A, 2B, 2C, 2D, 2), each having a peeling blade (21A, 21B, 21C, 21D, 21) which has a peeling edge (216) and is designed to peel off the skin, peel or rind of an object to be peeled against the peeling edge (216) when the peeling blade (21A, 21B, 21C, 21D, 21) is brought to bear against the object to be peeled and is moved in a peeling direction (S) relative to the object to be peeled; wherein
at least one of the peeling blades (21A, 21B, 21C, 21D, 21) is mounted obliquely with respect to the peeling direction (S) in such a way that an adjustable angle of between 90°, at which the peeling edge (216) is perpendicular to the peeling direction (S), and 0°, at which the peeling edge (216) runs parallel to the peeling direction (S), is formed between the peeling edge (216) of the peeling blade (21) and the peeling direction (S).

5. Peeling device according to claim 4, **characterised in that** the peeling blades (21A, 21B, 21C, 21D, 21) of all the peeling units (2A, 2B, 2C, 2D, 2) are mounted obliquely with respect to the peeling direction (S).

6. Peeling device according to claim 4 or 5, **characterised in that** the peeling blades (21A, 21B, 21C, 21D, 21) are mounted such that they can rotate with respect to the peeling direction (S).

7. Peeling device according to one of the preceding claims, **characterised in that** the peeling units (2A, 2B, 2C, 2D, 2) are arranged at a spatial distance from one another in such a way that the peeling blades (21A, 21B, 21C, 21D, 21) can be brought to bear against different points on a surface of the object (100) to be peeled.

8. Peeling device according to claim 7, **characterised in that** the peeling units (2A, 2B, 2C, 2D, 2) are arranged in such a way that the contact points where the peeling blades (21A, 21B, 21C, 21D, 21) make contact with an object to be peeled lie in one plane.

9. Peeling device according to claim 7 or 8, **characterised in that** the peeling units (2A, 2B, 2C, 2D, 2) are arranged at equal angular spacings on a mount (3), wherein the mount can preferably be displaced in the peeling direction.

10. Peeling device according to one of the preceding claims, **characterised in that** the peeling blades (21A, 21B, 21C, 21D, 21) are in each case held by a holding device (22A, 22B, 22C, 22D, 22) of the peeling unit (2A, 2B, 2C, 2D, 2).

11. Peeling device according to claim 10, **characterised in that** the peeling blades (21A, 21B, 21C, 21D, 21) are mounted parallel to the peeling edge (216) and such that they can pivot with respect to the holding device (22).

12. Peeling device according to claim 10 or 11, **characterised in that** the holding devices (22A, 22B, 22C, 22D, 22) are in each case fixed to a shaft (23A, 23B, 23C, 23D, 23) running essentially perpendicular to the peeling edge (216).

13. Peeling device according to claim 12, **characterised in that** the shaft (23A, 23B, 23C, 23D, 23) is mounted such that it can rotate about its longitudinal axis.

14. Peeling device according to claim 12 or 13, **characterised in that** the shaft (23A, 23B, 23C, 23D, 23) is mounted such that it can be displaced in its longitudinal direction.

15. Peeling device according to one of claims 12 to 14, **characterised in that** the shafts (23A, 23B, 23C, 23D, 23) are oriented with the ends at which the respective peeling blade (21A, 21B, 21C, 21D, 21) is arranged pointing towards a common point (M).

16. Peeling device according to one of claims 12 to 15, **characterised in that** a linear movement mechanism is provided for effecting a displacement of the shaft in the longitudinal direction.

17. Peeling device according to one of claims 12 to 16, **characterised in that** a rotation mechanism is provided for effecting a rotational movement of the shaft.

18. Peeling device according to claims 16 and 17, **characterised in that** the linear movement mechanism and the rotation mechanism are coupled to one another.

19. Peeling device according to one of claims 12 to 18, **characterised in that** the shaft has a pin (231) which is arranged on a circumferential surface and runs in the radial direction, wherein the pin (231) engages in a helical cutout (241) of a sleeve (24) and wherein the shaft (23) and the sleeve (24) are accommodated in a casing (25) of the peeling unit (2).

20. Peeling device according to one of claims 12 to 18, **characterised in that** the shaft has a pin (231) which is arranged on a circumferential surface and runs in the radial direction, wherein the pin (231) engages in a cutout (241) of a sleeve (24), which cutout runs parallel to the shaft, and wherein the shaft and the sleeve (24) are accommodated in a casing (25) of the peeling unit (2).

21. Peeling device according to one of claims 16 to 20, **characterised in that** the linear movement mechanism comprises a spring (27) which acts on the shaft.

22. Peeling device according to one of claims 16 to 20, **characterised in that** the linear movement mechanism comprises a pair of magnets with one magnet arranged on the shaft.

23. Peeling device according to one of claims 16 to 20, **characterised in that** the linear movement mechanism comprises a pneumatically operable piston which acts on the shaft.

24. Peeling device according to one of the preceding claims, **characterised in that** the peeling device has a clamping device (70) for clamping the object to be peeled, wherein the clamping device is preferably mounted such that it can rotate.

## Revendications

1. Eplucheuse ayant les caractéristiques suivantes :
- un moyen de réception (70) pour tenir le produit à éplucher ;
- au moins trois unités éplucheuses (2A, 2B, 2C, 2D, 2) ayant chacune un couteau d'épluchage (21A, 21B, 21C, 21D, 21) muni d'une arête d'épluchage (216) et réalisé pour que la peau, la coquille ou l'écorce du produit à éplucher puisse être épluchée par l'arête (216) lorsque le couteau d'épluchage (21A, 21B, 21C, 21D, 21) est mis en appui contre le produit à éplucher et se déplace par rapport à celui-ci dans une direction d'épluchage (S) ;
- au moins l'un des couteaux d'épluchage (21A, 21B, 21C, 21D, 21) est monté à rotation par rapport à l'installation d'épluchage (S) pour que l'arête d'épluchage (216) fasse avec la direction d'épluchage (S) un angle compris entre 90°, pour lequel l'arête d'épluchage (216) est perpendiculaire à la direction d'épluchage (S) et 0°, angle pour lequel l'arête d'épluchage (216) est parallèle à la direction d'épluchage (S).

2. Eplucheuse selon la revendication 1,
**caractérisée en ce que**
les couteaux d'épluchage (21A, 21B, 21C, 21D, 21) de toutes les unités éplucheuses (2A, 2B, 2C, 2D, 2) sont montés rotatifs par rapport à la direction d'épluchage (S).

3. Eplucheuse selon la revendication 1 ou 2,
**caractérisée en ce que**
les couteaux d'épluchage (21A, 21B, 21C, 21D, 21) sont montés pivotant entre un angle de 90° pour lequel l'arête d'épluchage (216) du couteau d'épluchage (21) est perpendiculaire à la direction d'épluchage (S) et un angle de 0° pour lequel l'arête d'épluchage (216) est parallèle à la direction d'épluchage.

4. Eplucheuse ayant les caractéristiques suivantes :
- un moyen de réception (70) pour tenir le produit à éplucher ;
- au moins trois unités éplucheuses (2A, 2B, 2C, 2D, 2) avec chaque fois un couteau d'épluchage (21A, 21B, 21C, 21 D, 21) ayant une arête d'épluchage (216) et, réalisé pour éplucher la peau, la coquille ou l'écorce du produit par l'arête d'épluchage (216) lorsque le couteau éplucheur (21A, 21B, 21C, 21D, 21) est appliqué contre le produit à éplucher et déplacé par rapport au produit à éplucher dans une direction d'épluchage (S) ;
- au moins l'un des couteaux éplucheurs (21A, 21B, 21C, 21D, 21) est incliné par rapport à la direction d'épluchage (S) de façon à établir un angle réglable entre l'arête d'épluchage (216) du couteau éplucheur (21) et la direction d'épluchage (S) compris entre 90° pour lequel l'arête d'épluchage (216) est perpendiculaire à la direction d'épluchage (S) et 0° pour lequel l'arête d'épluchage (216) est parallèle à la direction d'épluchage (S).

5. Eplucheuse selon la revendication 4,
**caractérisée en ce que**
les couteaux éplucheurs (21A, 21B, 21C, 21D, 21) de toutes les unités éplucheuses (2A, 2B, 2C, 2D, 2) sont disposés inclinés par rapport à la direction d'épluchage (S).

6. Eplucheuse selon les revendications 4 ou 5,
**caractérisée en ce que**
les couteaux éplucheurs (21A, 21B, 21C, 21D, 21) sont montés pivotants par rapport à la direction d'épluchage (S).

7. Eplucheuse selon l'une des revendications précédentes,
**caractérisée en ce que**
les unités éplucheuses (2A, 2B, 2C, 2D, 2) sont écartées dans l'espace de façon que les couteaux éplucheurs (21A, 21B, 21C, 21D, 21) puissent être mis en appui en différents points contre la surface du produit à éplucher (100).

8. Eplucheuse selon la revendication 7,
**caractérisée en ce que**
les unités éplucheuses (2A, 2B, 2C, 2D, 2) sont installées pour que les points d'attaque des couteaux éplucheurs (21A, 21B, 21C, 21D, 21) se situent dans un plan, contre le produit à éplucher.

9. Eplucheuse selon les revendications 7 et 8,
**caractérisée en ce que**
les unités éplucheuses (2A, 2B, 2C, 2D, 2) sont disposées suivant les mêmes intervalles angulaires sur un support (3) et la fixation est de préférence coulissante dans la direction d'épluchage.

10. Eplucheuse selon l'une des revendications précédentes,
**caractérisée en ce que**
les couteaux éplucheurs (21A, 21B, 21C, 21D, 21) sont tenus chaque fois par un dispositif de support (22A, 22B, 22C, 22D, 22) de l'unité éplucheuse (2A, 2B, 2C, 2D, 2).

11. Eplucheuse selon la revendication 10,
**caractérisée en ce que**
les couteaux éplucheurs (21A, 21B, 21C, 21D, 21) sont parallèles à l'arête d'épluchage (216) en étant pivotant par rapport au support (22).

12. Eplucheuse selon la revendication 10 ou 11,
**caractérisée en ce que**
les dispositifs de support (22A, 22B, 22C, 22D, 22) sont fixés chacun à un arbre (23A, 23B, 23C, 23D, 23) pratiquement perpendiculaire à l'arête d'épluchage (216).

13. Eplucheuse selon la revendication 12,
**caractérisée en ce que**
l'arbre (23A, 23B, 23C, 23D, 23) est pivotant autour de son axe longitudinal.

14. Eplucheuse selon la revendication 12 ou 13,
**caractérisée en ce que**
l'arbre (23A, 23B, 23C, 23D, 23) est coulissant dans sa direction longitudinale.

15. Eplucheuse selon l'une des revendications 12 à 14,
**caractérisée en ce que**
les arbres (23A, 23B, 23C, 23D, 23) sont alignés vers un point commun (M)avec les extrémités portant chacune un couteau éplucheur (21A, 21B, 21C, 21D, 21).

16. Eplucheuse selon l'une des revendications 12 à 15,
**caractérisée par**
un mécanisme d'avance pour coulisser l'arbre dans la direction longitudinale.

17. Eplucheuse selon l'une des revendications 12 à 16,
**caractérisée par**
un mécanisme de rotation pour produire un mouvement de rotation de l'arbre.

18. Eplucheuse selon les revendications 16 et 17,
**caractérisée en ce que**
le mécanisme d'avance et le mécanisme de rotation sont couplés.

19. Eplucheuse selon l'une des revendications 12 à 18,
**caractérisée en ce que**
l'arbre présente un tourillon (231) dirigé radialement sur une surface périphérique, le tourillon (231) pénétrant dans une cavité (241) hélicoïdale d'un manchon (24), l'arbre (23) et le manchon (24) étant reçus dans un logement (25) de l'unité éplucheuse (2).

20. Eplucheuse selon l'une des revendications 12 à 18,
**caractérisée en ce que**
l'arbre a un tourillon (231) dirigé radialement sur la surface périphérique, le tourillon (231) pénétrant dans une cavité (241) parallèle à l'arbre d'un manchon (24) et l'arbre et le manchon (24) sont reçus dans un logement (25) de l'unité éplucheuse (2).

21. Eplucheuse selon l'une des revendications 16 à 20,
**caractérisée en ce que**
le mécanisme d'avance comporte un ressort (27) agissant sur l'arbre.

22. Eplucheuse selon l'une des revendications 16 à 20,
**caractérisée en ce que**
le mécanisme d'avance comporte une paire d'aimants dont un aimant est installé sur l'arbre.

23. Eplucheuse selon l'une des revendications 16 à 20,
**caractérisée en ce que**
le mécanisme d'avance comporte un piston pneumatique agissant sur l'arbre.

24. Eplucheuse selon l'une des revendications précédentes,
**caractérisée en ce qu'**
elle comporte un dispositif de fixation (70), de préférence monté à rotation, pour fixer le produit à éplucher.
